# EUROPÄISCHE PATENTSCHRIFT

(11) **EP 4 223 602 B1**
(45) Veröffentlichungstag und Bekanntmachung des Hinweises auf die Patenterteilung: **04.12.2024**
(21) Anmeldenummer: 23153387.8
(22) Anmeldetag: 26.01.2023
(51) Int. Cl.: B60T 17/22

(54) **BREMSPROBENANLAGE UND ANORDNUNG ZUR DURCHFÜHRUNG EINER AUTOMATISCHEN BREMSPROBE EINER BREMSANLAGE EINES SCHIENENFAHRZEUGS SOWIE EIN VERFAHREN ZUR HERSTELLUNG EINER BREMSPROBENANLAGE**
BRAKE TEST SYSTEM AND ASSEMBLY FOR PERFORMING AN AUTOMATIC BRAKE TEST OF A BRAKE SYSTEM OF A RAIL VEHICLE AND A METHOD FOR PRODUCING A BRAKE TEST SYSTEM
SYSTÈME D'ÉCHANTILLONNAGE DE FREINAGE ET DISPOSITIF POUR EFFECTUER UN ÉCHANTILLON DE FREINAGE AUTOMATIQUE D'UN SYSTÈME DE FREINAGE D'UN VÉHICULE FERROVIAIRE ET PROCÉDÉ DE FABRICATION D'UN SYSTÈME D'ÉCHANTILLONNAGE DE FREINAGE

(30) Priorität: 08.02.2022 DE 102022102921
(43) Veröffentlichungstag der Anmeldung: 09.08.2023
(73) Patentinhaber: KNORR-BREMSE Systeme für Schienenfahrzeuge GmbH, 80809 München (DE)
(72) Erfinder: LINSENMEYER, Rudolf, 85250 Altomünster (DE)

(56) Entgegenhaltungen:
- EP-A1- 0 983 920
- WO-A1-94/07729
- US-A- 4 847 770
- US-A- 5 747 685
- US-A1- 2007 247 000
- US-A1- 2013 125 637

## Beschreibung

Die vorliegende Erfindung betrifft eine Bremsprobenanlage zur Durchführung wenigstens eines Teils einer automatischen Bremsprobe einer Bremsanlage wenigstens eines Schienenfahrzeugs. Des Weiteren betrifft die Erfindung eine Anordnung zur Durchführung einer automatischen Bremsprobe mit einer solchen Bremsprobenanlage, sowie ein Verfahren zur Herstellung einer derartigen Bremsprobenanlage.

Die obligatorische Bremsprobe vor der Abfahrt eines Zuges, wie etwa eines Güterzugs, ist ein zeitaufwendiger Vorgang. Hierzu ist es bislang üblich, dass Lokführer und/oder Betriebspersonal das Anlegen und Lösen der Bremse mit Hilfe von neben dem Gleis installierten stationären Bremsprobenanlagen manuell testen und verifizieren.

Es sind andererseits auch bereits Konzepte für eine automatische Bremsprobe bekannt, die die Vorbereitungszeit vor Fahrtantritt reduzieren können. In der Folge werden Standzeiten im Terminal- oder Güterbahnhof und Kosten erheblich gesenkt. Solche Konzepte verwenden unter anderem meist automatische Mittelkupplungen (AK) und digitalen Datentransfer zwischen allen Fahrzeugen des Zugverbands.

Diese Konzepte gehen davon aus, dass eine Lokomotive an den Zugverband heranfährt und der mechanische, elektrische und digitale Kuppelvorgang durchgeführt wird. Dieses Konzept hat jedoch den Nachteil, dass die Verwendung des Luftkompressors einer Lokomotive eine oftmals langsame und kostenintensive Vorgehensweise ist, die Luftbremsanlage eines Zugverbands für eine automatische Bremsprobe aufzurüsten und mit der erforderlichen Druckluft zu füllen (mit einer Dauer von beispielsweise ca. 50 min). Damit wird bei diesem Konzept der Zeitvorteil durch die automatische Bremsprobe durch eine vergleichsweise lange Aufrüstzeit durch die Lokomotive zumindest teilweise negativ kompensiert. Würde man umgekehrt den Weg gehen, Luftkompressoren von Lokomotiven in ihrer Leistung zu steigern, hätte dies meist deutlich höhere Herstellungskosten zur Folge.

WO 94/07729 A1 betrifft ein Verfahren und eine Vorrichtung zur Prüfung der Dichtheit und/oder der Bremsfunktion einer pneumatischen Bremsanlage für mindestens einen Zug von pneumatisch miteinander gekoppelten Fahrzeugeinheiten, so dass eine pneumatische Einheit unabhängig vom Zug diesen mit Druck beaufschlagt und für mindestens ein Zeitintervall Drücke und/oder Strömungen im pneumatischen Bremssystem erfasst, wobei die erhaltenen Werte in einer Steuereinheit aufgezeichnet und ausgewertet werden zur anschließenden Anzeige auf oder über mindestens eine mit der Steuereinheit verbundene Ausgabeeinheit.

Eine Aufgabe der Erfindung ist es, eine Vorrichtung zur Durchführung einer Bremsprobe einer Bremsanlage wenigstens eines Schienenfahrzeugs bereitzustellen, die es ermöglicht, die Dauer und Kosten der Zugaufrüstung und Bremsprobe zu reduzieren.

Die Erfindung betrifft eine Bremsprobenanlage zur Durchführung wenigstens eines Teils einer automatischen Bremsprobe einer Bremsanlage wenigstens eines Schienenfahrzeugs gemäß den beigefügten Patentansprüchen. Des Weiteren betrifft die Erfindung eine Anordnung zur Durchführung einer automatischen Bremsprobe mit einer solchen Bremsprobenanlage, sowie ein Verfahren zur Herstellung einer derartigen Bremsprobenanlage. Vorteilhafte Aus- und Weiterbildungen der Erfindung sind in den Unteransprüchen und in der nachfolgenden Beschreibung angegeben.

Gemäß einem Aspekt betrifft die Erfindung eine Bremsprobenanlage zur Durchführung wenigstens eines Teils einer automatischen Bremsprobe einer Bremsanlage wenigstens eines Schienenfahrzeugs, welche nicht Teil einer Anlage ist, die eingerichtet ist, das wenigstens eine Schienenfahrzeug zu bewegen, aufweisend eine Datenverarbeitungsvorrichtung mit einer Datenquelle, eine erste automatische Kopplungseinrichtung, die mit wenigstens einem Fluidanschluss des wenigstens einen Schienenfahrzeugs koppelbar ist zur Bereitstellung eines druckbeaufschlagten Fluids an die Bremsanlage des wenigstens einen Schienenfahrzeugs, und eine zweite automatische Kopplungseinrichtung, die mit der Datenverarbeitungsvorrichtung verbunden ist und zur Kopplung mit einem elektrischen Anschluss des wenigstens einen Schienenfahrzeugs ausgebildet ist. Die Datenverarbeitungsvorrichtung ist konfiguriert, Daten zur Durchführung des wenigstens einen Teils der automatischen Bremsprobe von der Datenquelle zu empfangen und Testsignale zur Durchführung des wenigstens einen Teils der automatischen Bremsprobe an das wenigstens eine Schienenfahrzeug zu übertragen, Signalantworten von dem wenigstens einen Schienenfahrzeug während der Durchführung oder nach Beendigung des wenigstens einen Teils der automatischen Bremsprobe zu empfangen, und die Signalantworten oder davon abgeleitete Signale an wenigstens eine Auswerteeinrichtung zur Auswertung der empfangenen Signalantworten zu übertragen.

Mit der erfindungsgemäßen Bremsprobenanlage ist es ermöglicht, die Dauer und Kosten der Zugaufrüstung und Bremsprobe zu reduzieren. Denn einerseits kann das zeitsparende und weniger personalintensive Verfahren der automatischen Bremsprobe angewandt werden, andererseits kann durch die Verwendung einer dafür konzipierten Bremsprobenanlage ein vergleichsweise günstiger und dennoch leistungsstarker Kompressor zum Aufrüsten der Bremsanlage mit dem druckbeaufschlagten Fluid (z.B. Luft) eingesetzt und dadurch die Dauer einer Bremsprobe reduziert werden.

Beispielsweise kann eine in Rangier- oder Güterbahnhöfen bereits installierte stationäre Bremsprobenanlage für die herkömmliche Schraubenkupplung verwendet werden, die einen Zugverband in deutlich kürzerer Zeit (beispielsweise 20 - 30 min) gegenüber einer Lokomotive und erheblich preiswerter, beispielsweise durch Verwendung eines Industriekompressors, mit Luft befüllen kann. Damit bietet die Erfindung den Vorteil, dass bereits existierende stationäre Bremsprobenanlagen in das Konzept einbezogen und technisch angepasst werden können. Die Erfindung ist natürlich auch auf neu herzustellende Bremsprobenanlagen anwendbar, die auf dem Konzept der existierenden stationären Bremsprobenanlagen beruhen. Daneben ist die Erfindung aber auch auf mobile oder dahingehend weiterentwickelte Bremsprobenanlagen anwendbar. Somit ist es ermöglicht, dass mit einer solchen erfindungsgemäßen Bremsprobenanlage auch Schienenfahrzeuge mit einer automatischen Mittelkupplung bedient werden können.

Die erfindungsgemäße Bremsprobenanlage bzw. Zugaufrüstvorrichtung bietet den weiteren Vorteil, dass ein auf dem Gleis abgestellter Zug für die Fahrt vorbereitet werden kann, ohne dass hierfür eine Lokomotive oder ein manuelles Kuppeln erforderlich ist. Die Bremsprobenanlage übernimmt die Tätigkeiten, die sonst über eine Lokomotive für eine automatische Bremsprobe übernommen werden müssten, wie beispielsweise Belüften der Pneumatik, Bereitstellen von Testdaten, Empfangen und Bewerten von Signalantworten etc. Die Betriebszeit von teuren Lokomotiven wird verlagert auf betriebskostengünstigere Aufrüstvorrichtungen.

Gemäß einer Ausführungsform ist die Datenquelle eingerichtet, die Daten zur Durchführung des wenigstens einen Teils der automatischen Bremsprobe zu speichern und die Datenverarbeitungsvorrichtung ist konfiguriert, anhand der gespeicherten Daten die Testsignale zu erzeugen, die an das wenigstens eine Schienenfahrzeug zur Durchführung des wenigstens einen Teils der automatischen Bremsprobe übertragen werden. Somit kann die Datenverarbeitungsvorrichtung dezentral und vollständig autark ausgebildet werden und ist nicht von etwaigen Datenverbindungen mit externen Vorrichtungen oder Leitstellen abhängig.

Gemäß einer Ausführungsform ist die Datenquelle eingerichtet, wenigstens einen Teil der von dem wenigstens einen Schienenfahrzeug empfangenen Signalantworten zu speichern. Das hat den Vorteil, dass die Auswertung durch eine separate Vorrichtung und/oder zu einem späteren Zeitpunkt, etwa durch eine die gespeicherten Daten am Ort der Bremsprobenanlage abrufende Person, vorgenommen werden kann.

Gemäß einer Ausführungsform weist die Bremsprobenanlage mindestens einen Teil der Auswerteeinrichtung zur Auswertung der empfangenen Signalantworten auf. Das hat den Vorteil, dass auch die Auswertung teilweise oder vollständig autark am Ort der Bremsprobenanlage vorgenommen werden kann.

Gemäß einer Ausführungsform ist die Auswerteeinrichtung eingerichtet, wenigstens eine der folgenden Auswertungen durchzuführen: eine Bewertung der empfangenen Signalantworten im Hinblick auf die automatische Bremsprobe, eine Erstellung einer automatisierten Fahrzeugdiagnose, eine Erstellung einer Schienenfahrzeugliste, eine Erstellung eines Bremszettels, eine Generierung eines Signals einer Fertigmeldung zum Ankuppeln eines Triebfahrzeugs an das wenigstens eine Schienenfahrzeug.

Gemäß einer Ausführungsform weist die Datenquelle eine Empfangseinrichtung auf, die eingerichtet ist, mit einer von der Bremsprobenanlage entfernten Leitstelle zum Empfang der Daten zur Durchführung des wenigstens einen Teils der automatischen Bremsprobezu kommunizieren. Hierbei ist die Datenverarbeitungsvorrichtung konfiguriert, anhand der empfangenen Daten die Testsignale zu erzeugen, die an das wenigstens eine Schienenfahrzeug zur Durchführung des wenigstens einen Teils der automatischen Bremsprobe übertragen werden. Damit kann die automatische Bremsprobe zumindest teilweise von einer Leitstelle vorgegeben, eingeleitet und/oder durchgeführt werden.

Gemäß einer Ausführungsform weist die Datenquelle eine Empfangseinrichtung auf, die mit einer von der Bremsprobenanlage entfernten cloudbasierten Computer-Infrastruktur zum Empfang der Daten zur Durchführung des wenigstens einen Teils der automatischen Bremsprobe koppelbar ist. Hierbei ist die Datenverarbeitungsvorrichtung konfiguriert, anhand der empfangenen Daten die Testsignale zu erzeugen, die an das wenigstens eine Schienenfahrzeug zur Durchführung des wenigstens einen Teils der automatischen Bremsprobe übertragen werden. Damit kann die automatische Bremsprobe zumindest teilweise cloudbasiert über eine Computer-Infrastruktur, etwa von einem Bahnbetreiber, vorgegeben, eingeleitet und/oder durchgeführt werden.

Gemäß einer Ausführungsform weist die Datenverarbeitungsvorrichtung eine Sendeeinrichtung auf, die zur Kommunikation und zur Auswertung der empfangenen Signalantworten mit einer von der Bremsprobenanlage entfernten Auswerteeinrichtung koppelbar ist. Damit kann die Auswertung an einem von der Bremsprobenanlage entfernten Ort vorgenommen werden.

Insbesondere ist gemäß einer Ausführungsform die Sendeeinrichtung zur Auswertung der empfangenen Signalantworten mit einer von der Bremsprobenanlage entfernten Leitstelle zur Durchführung des wenigstens einen Teils der automatischen Bremsprobe oder mit einer von der Bremsprobenanlage entfernten cloudbasierten Computer-Infrastruktur koppelbar.

Gemäß einer Ausführungsform ist die Bremsprobenanlage als eine mobile Anlage ausgebildet, die in einem Gleisbereich des Gleises an mehrere unterschiedliche Positionen bewegbar ist. Das bietet den Vorteil, dass die Bremsprobenanlage an verschiedenen Orten variabel einsetzbar und auch automatisierbar ist.

Beispielsweise ist gemäß einer Ausführungsform vorgesehen, dass die mobile Anlage auch auf dem Gleis fahren kann (dabei aber nicht eingerichtet und geeignet ist, das wenigstens eine Schienenfahrzeug zu bewegen). Gemäß einer weiteren Ausführungsform ist die mobile Anlage auf einer eigens vorgesehen "Sonderschiene" fahrbar, die z.B. im Gleisbett des Gleises angebracht ist, auf dem sich das wenigstens eine Schienenfahrzeug befindet. Die "Sonderschiene" ist insbesondere parallel zum Gleis, auf dem sich das wenigstens eine Schienenfahrzeug befindet, z.B. im gleichen Gleisbett angeordnet. Bei dieser Ausführungsform ist es beispielsweise möglich, dass die Bremsprobenanlage unter einem oder mehreren der Schienenfahrzeuge hindurch fahren kann. Gemäß einer weiteren Ausführungsform ist es auch möglich, die mobile Anlage in einer "Grube", mithin einer Vertiefung im Boden, die z.B. neben oder im Gleisbett vorgesehen ist, verfahrbar auszubilden und anzuordnen.

Gemäß einer Ausführungsform ist wenigstens eine der ersten und zweiten Kopplungseinrichtungen an einer von der Bremsprobenanlage in Richtung des wenigstens einen Schienenfahrzeugs ausfahrbaren und von dieser gesteuerten Positioniereinrichtung angebracht. Damit ist die Bremsprobenanlage vollständig automatisierbar und kann z.B. von einer Leitstelle oder autark entlang des Gleises bewegt und über die Positioniereinrichtung mit einem Anschluss des zu prüfenden Schienenfahrzeugs verbunden werden.

Ein weiterer Aspekt der Erfindung betrifft eine Anordnung zur Durchführung einer automatischen Bremsprobe einer Bremsanlage wenigstens eines Schienenfahrzeugs, die eine erfindungsgemäße Bremsprobenanlage aufweist sowie eine von der Bremsprobenanlage entfernte Leitstelle zur Durchführung des wenigstens einen Teils der automatischen Bremsprobe oder eine von der Bremsprobenanlage entfernte cloudbasierte Computer-Infrastruktur, welche mit der Datenquelle der Datenverarbeitungsvorrichtung zum Empfang der Daten zur Durchführung des wenigstens einen Teils der automatischen Bremsprobe gekoppelt ist.

Ein weiterer Aspekt der Erfindung betrifft eine Anordnung zur Durchführung einer automatischen Bremsprobe einer Bremsanlage wenigstens eines Schienenfahrzeugs, die alternativ oder zusätzlich neben der erfindungsgemäßen Bremsprobenanlage die Auswerteeinrichtung zur Auswertung der empfangenen Signalantworten aufweist, wobei wenigstens ein Teil der Auswerteeinrichtung von der Bremsprobenanlage entfernt ist.

Gemäß einer Ausführungsform ist die Auswerteeinrichtung wenigstens teilweise in einer Leitstelle zur Durchführung des wenigstens einen Teils der automatischen Bremsprobe enthalten oder mit dieser gekoppelt ist, und/oder in einer Kontrollstelle zur Bewertung des wenigstens einen Teils der automatischen Bremsprobe enthalten oder mit dieser gekoppelt und/oder in einer cloudbasierten Computer-Infrastruktur enthalten oder mit diesem gekoppelt.

Ein weiterer Aspekt der Erfindung betrifft ein Verfahren zur Herstellung einer Bremsprobenanlage für die Durchführung wenigstens eines Teils einer automatischen Bremsprobe einer Bremsanlage wenigstens eines Schienenfahrzeugs. Insbesondere ist das Verfahren vorteilhaft einsetzbar zur Aufrüstung bzw. Erweiterung einer bestehenden Bremsprobenanlage. Das Verfahren umfasst dabei den Schritt des Bereitstellens einer Bremsprobenanlage, welche nicht Teil einer Anlage ist, die eingerichtet ist, das wenigstens eine Schienenfahrzeug zu bewegen, wobei die Bremsprobenanlage eine erste Kopplungseinrichtung aufweist, die mit wenigstens einem Fluidanschluss des wenigstens einen Schienenfahrzeugs koppelbar ist zur Bereitstellung eines druckbeaufschlagten Fluids an die Bremsanlage des wenigstens einen Schienenfahrzeugs, und eine zweite Kopplungseinrichtung aufweist, die zur Koppelung mit einem elektrischen Anschluss des wenigstens einen Schienenfahrzeugs ausgebildet ist.

Das Verfahren umfasst ferner den Schritt des Anordnens einer Datenverarbeitungsvorrichtung mit einer Datenquelle in der Bremsprobenanlage und Verbinden der Datenverarbeitungsvorrichtung mit der zweiten Kopplungseinrichtung, wobei die Datenverarbeitungsvorrichtung konfiguriert ist, Daten zur Durchführung des wenigstens einen Teils der automatischen Bremsprobe von der Datenquelle zu empfangen und Testsignale zur Durchführung des wenigstens einen Teils der automatischen Bremsprobe an das wenigstens eine Schienenfahrzeug zu übertragen, Signalantworten von dem wenigstens einen Schienenfahrzeug während der Durchführung oder nach Beendigung des wenigstens einen Teils der automatischen Bremsprobe zu empfangen, und die Signalantworten oder davon abgeleitete Signale an wenigstens eine Auswerteeinrichtung zur Auswertung der empfangenen Signalantworten zu übertragen. Dies hat den Vorteil, dass auch bereits bestehende Bremsprobenanlagen technisch ertüchtigt werden können, um das erfindungsgemäße Konzept umzusetzen und beispielsweise moderne oder zukünftige Züge mit automatischer Mittelkupplung bedienen zu können. Da erfindungsgemäß eine Neuherstellung einer vollständigen Bremsprobenanlage vermieden werden kann, lässt sich ein deutlicher Kostenvorteil erzielen.

Gemäß einer Ausführungsform ist die Bremsprobenanordnung stationär neben dem Gleis positioniert, und der Schritt des Anordnens der Datenverarbeitungsvorrichtung wird in der stationären Bremsprobenanlage durchgeführt. Dies hat den Vorteil, dass auch existierende, am Gleis installierte stationäre Bremsprobenanlagen in das erfindungsgemäße Konzept einbezogen und technisch angepasst werden können, womit sich eine kostensparende Umsetzung des erfindungsgemäßen Konzepts erzielen lässt.

Die beschriebenen Ausführungsformen und Aspekte der Erfindung können nebeneinander oder auch in Kombination miteinander angewandt werden.

Die beschriebenen Einrichtungen, wie die Datenverarbeitungsvorrichtung, Auswerteeinrichtung, Datenquelle, Sende- und Empfangseinrichtungen, Leitstelle und/oder cloudbasierte Computer-Infrastruktur, können jeweils z.B. eine oder mehrere jeweilige integrierte Signalverarbeitungsschaltungen oder einen oder auch mehrere Datenverarbeitungsprozessoren, wie z.B. einen oder mehrere Mikroprozessoren bekannter Art, enthalten. In einer weiteren Ausführungsform können die Einrichtungen, oder ein Teil davon, auch jeweils ein verteiltes System sein, welches beispielsweise über ein Netzwerk, wie z.B. über das Internet, mehrere Datenverarbeitungsprozessoren miteinander verbindet, wobei ein Teil dieser z.B. in der Bremsprobenanlage, Leitstelle und/oder cloudbasierten Computer-Infrastruktur, und ein anderer Teil davon entfernt, etwa in einer anderen Computer-Infrastruktur, enthalten sein kann, mit der die Bremsprobenanlage, Leitstelle bzw. cloudbasierte Computer-Infrastruktur über das Internet kommuniziert. Beispielsweise ist die Bremsprobenanlage mit einer SIM-Karte ausgestattet, welche die Datenverarbeitungsvorrichtung wenigstens teilweise enthalten kann, um über ein Telekommunikationsnetzwerk oder anderes Kommunikationsnetzwerk eine Internetverbindung oder eine Verbindung zu einem anderen Netzwerk herzustellen. Insgesamt sind hinsichtlich technischer Implementierung der beschriebenen Einrichtungen verschiedene Ausführungsformen, die dem Fachmann bekannt sind, denkbar.

Mit dem Begriff cloudbasierte Computer-Infrastruktur soll allgemein die dem Fachmann bekannte Nutzung eines oder mehrerer (Server-) Computer oder eines Computernetzwerks (auch als Computer-Infrastruktur bezeichnet) im Rahmen einer Cloud oder des Cloud Computings verstanden werden. Unter Cloud oder Cloud Computing versteht man eine internetbasierte oder allgemein netzwerkbasierte Bereitstellung von ("remote") Computer-Infrastruktur, wie Speicherplatz, Rechenleistung oder Anwendungssoftware, die z.B. in einem entfernten Rechenzentrum angesiedelt ist. Eine cloudbasierte Computer-Infrastruktur könnte auch als Remote Computer oder Remote Computer-Infrastruktur bezeichnet werden. Die Nutzung dieser Infrastrukturen erfolgt üblicherweise vorwiegend über Programme auf den zugreifenden Geräten oder Einrichtungen (Clients), wie im vorliegenden Fall z.B. die Bremsprobenanlage, Leitstelle und/oder Lokomotive. Eine solche Computer-Infrastruktur kann beispielsweise in einem Ziel- oder Zwischenbahnhof oder einem anderen Ort vorgesehen sein.

Die Erfindung wird im Folgenden anhand der in der Zeichnung dargestellten Figuren näher erläutert. Es zeigen:
- Fig. 1: eine schematische Darstellung einer Anordnung zur Durchführung wenigstens eines Teils einer automatischen Bremsprobe gemäß einer Ausführungsform der Erfindung,
- Fig. 2: eine schematische Darstellung einer Bremsprobenanlage gemäß einer Ausführungsform der Erfindung,
- Fig. 3: eine schematische Darstellung einer Anordnung zur Durchführung wenigstens eines Teils einer automatischen Bremsprobe gemäß einer weiteren Ausführungsform der Erfindung,
- Fig. 4: eine schematische Darstellung einer Bremsprobenanlage gemäß einer weiteren Ausführungsform der Erfindung,
- Fig. 5: eine schematische Darstellung einer Anordnung zur Durchführung wenigstens eines Teils einer automatischen Bremsprobe gemäß einer weiteren Ausführungsform der Erfindung,
- Fig. 6: eine schematische Darstellung einer Bremsprobenanlage gemäß einer weiteren Ausführungsform der Erfindung.

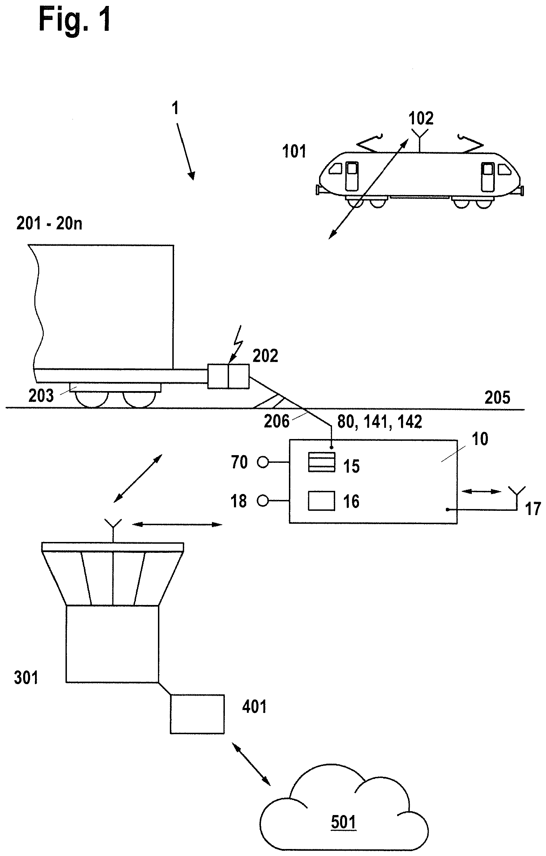

In **Fig. 1** ist eine schematische Darstellung einer Anordnung zur Durchführung wenigstens eines Teils einer automatischen Bremsprobe gemäß einer ersten Ausführungsform der Erfindung gezeigt. Eine allgemeine Intention ist, eine Bremsprobe, oder wenigstens einen Teil davon, vor der Abfahrt eines Zuges, wie etwa eines Güterzugs, durchzuführen, damit der Zug abgefertigt werden und losfahren kann. Der Zug kann beispielsweise einen oder mehrere Schienenfahrzeuge, z.B. Güter- oder Personenwaggons 201 bis 20n in der Anzahl 1 bis N aufweisen. Solche Schienenfahrzeuge weisen bekannte Anschlüsse auf, die untereinander oder auch mit entsprechenden Zugaufrüstvorrichtungen koppelbar sind, wie z.B. Anschlüsse für Luft zur Kopplung mit einer Druckluftbremsanlage des jeweiligen Schienenfahrzeugs, und/oder elektrische Anschlüsse für das Bordnetz und/oder Kommunikations- oder Sensorleitungen des jeweiligen Schienenfahrzeugs. In **Fig. 1** ist ein solcher Anschluss beispielhaft als ein Anschluss 202 dargestellt. Der Anschluss 202 kann beispielsweise ein kombinierter Fluidanschluss (z.B. Druckluftanschluss) und elektrischer Anschluss (z.B. Datenanschluss) des jeweiligen Schienenfahrzeugs 201 - 20n sein. Der Fluidanschluss und der elektrische Anschluss können aber auch getrennt ausgeführt sein. Der Anschluss 202 kann z.B. in einer bekannten Schraubenkupplung oder automatischen Mittelkupplung (AK) enthalten oder als solche ausgeführt sein. Die gekoppelten Schienenfahrzeuge in Anzahl N, die gemeinsam einen Zug bilden, sind ihrerseits untereinander mit ihren jeweiligen Anschlüssen 202 bzw. Kupplungen gekoppelt. Am Ende oder am Anfang des Zuges der Schienenfahrzeuge 201 - 20n kann eine Lokomotive 101 (oder ein anderes Triebfahrzeug) angekuppelt werden, in der der Lokführer beispielsweise überprüft, ob eine Bremsprobe vorschriftsmäßig ausgeführt wurde. Die Lokomotive 101 verfügt ihrerseits über eine Sende-/ Empfangseinrichtung 102, über welche sie z.B. mit einer Leitstelle 301 und/oder anderen Einrichtungen kommunizieren kann. Als Kommunikationsarten und -medien kommen dabei eine Vielzahl an Möglichkeiten in Betracht, wie etwa ein Telekommunikationsnetzwerk, ein Bahnbetreiber-eigenes Netzwerk, oder auch eine direkte Funkverbindung.

Eine Leit- oder Kontrollstelle 301 kann zentral oder auch dezentral eingerichtet sein und kann ebenfalls in einer Vielzahl von Varianten implementiert sein, etwa in Form einer Steuerungs- und/oder Kontrollanlage, eines Computernetzwerks, oder eines einfachen Computers, der automatisiert ist oder von einer Person bedient wird. Die Leit- oder Kontrollstelle kann z.B. eine Leitstelle eines Abfahrtsbahnhofs oder eines Zielbahnhofs, eines Rangierbahnhofs, eines Personenbahnhofs oder allgemein eine Leit- oder Kontrollstelle eines übergeordneten oder regionalen Eisenbahnnetzwerks sein. Sie kann sowohl Leit- als auch Kontrollfunktionen zur Steuerung eines Eisenbahnbetriebs und/oder vorbereitender Maßnahmen (wie Aufrüstung und Bremsprobe eines Zuges) ausüben. Die Leit- oder Kontrollstelle kann auch nur als Kontrollinstanz (ohne Leit- oder Steuerungsfunktion) ausgeführt sein, wenn etwa nur eine durchzuführende Bremsprobe ausgewertet werden soll. Die Auswertung kann aber auch wenigstens teilweise z.B. direkt in der Lokomotive 101 oder in einer cloudbasierten Computer-Infrastruktur 501 durchgeführt werden. Insgesamt ist eine Vielzahl an bekannten Verfahren und Entitäten und deren Kombinationen zur Steuerung und/oder Kontrolle eines Eisenbahnbetriebs bekannt, die im Rahmen der vorliegenden Erfindung einsetzbar sind.

Die Leit- oder Kontrollstelle (im Folgenden kurz Leitstelle) 301 ist beispielsweise mit einer Verarbeitungseinrichtung 401 gekoppelt, welche Daten an die Lokomotive 101 und/oder in die cloudbasierte Computer-Infrastruktur 501 leiten kann. Die Verarbeitungsvorrichtung 401, etwa ein Servercomputer oder Computernetzwerk, ist optional und kann ein Teil der Leitstelle 301, oder ein Teil der Computer-Infrastruktur 501, oder auch separat vorgesehen sein.

Das Konzept der Bremsprobe und dessen technische Umsetzung ist dem Fachmann hierbei hinlänglich bekannt und soll an dieser Stelle nicht eingehend erläutert werden. Ebenso ist dem Fachmann das Konzept einer automatischen Bremsprobe bekannt. Ein Baustein einer solchen automatischen Bremsprobe ist insbesondere ein digitaler Datentransfer zwischen den zu prüfenden Schienenfahrzeugen und der zu prüfenden Anlage. Vorteilhaft ist auch der Einsatz von automatischen Mittelkupplungen, obwohl das Prinzip einer automatischen Bremsprobe grundsätzlich auch mit manuellen, z.B. Schraubenkupplungen durchführbar ist, sofern ein digitaler Anschluss für den Datentransfer vorhanden ist. Hier ist allerdings der Personalaufwand höher, weil die Schienenfahrzeuge manuell gekuppelt werden müssen.

Um die Funktion des gesamten Bremssystems zu überprüfen, findet nach der Zugzusammenstellung eine Bremsprobe statt. Die Bremsprobe ist z.B. in Deutschland in einer spezifischen Bremsvorschrift geregelt. Der Ablauf und die Formen der Bremsprobe sind vorgeschrieben. Die Bremsprobe ist im allgemeinen ein elementarer Bestandteil der Zugvorbereitung. Oftmals ist dazu vorgesehen, dass z.B. Lokführer und/oder Betriebspersonal nach dem Anlegen von Druckluft an das Bremssystem (das sogenannte Aufpumpen) mit Hilfe von neben dem Gleis installierten stationären Bremsprobenanlagen, die einen Kompressor dafür vorsehen, das Anlegen und Lösen der individuellen Wagenbremsen manuell testen und verifizieren und dabei den Zug entlang laufen müssen, um eine Augenscheinprüfung vorzunehmen.

Eine automatische Bremsprobe ist im Grundsatz eine automatisiert ablaufende Bremsprobe oder eine automatisiert ablaufende Teilsequenz einer Bremsprobe. Insbesondere beinhaltet diese einen Selbsttest zumindest eines Teils der betreffenden Bremsanlage. Die automatische Bremsprobe bzw. der Selbsttest kann einen vorbestimmten (z.B. vorgeschriebenen) Ablauf aufweist. Es werden zunächst Daten zur Durchführung wenigstens eines Teils der automatischen Bremsprobe erzeugt. Diese Daten können einen bestimmten Ablauf oder eine bestimmte Teilsequenz von mehreren Prozessschritten der automatischen Bremsprobe charakterisieren. Aus diesen Daten werden Testsignale erzeugt, die an das zu überprüfende Schienenfahrzeug gesendet werden. Das Prinzip des Aussendens von Testsignalen an ein zu testendes Objekt und des Empfangs von entsprechenden Signalantworten ist dem Fachmann bekannt und soll an dieser Stelle nicht näher beschrieben werden. Hierzu können im Grundsatz verschiedenartige Testprotokolle und/oder Kommunikationsprotokolle, die dem Fachmann bekannt sind, eingesetzt werden. Auch existieren hier oftmals detaillierte länderspezifische Anforderungen, die unterschiedlich sein können.

Insbesondere werden bei einer automatischen Bremsprobe oder Selbsttest wenigstens eines Teils der Bremsanlage anhand der empfangenen Daten erzeugte Testsignale nach einem vorbestimmten Muster an das Schienenfahrzeug übertragen, das mehrere durch die jeweiligen Testsignale bestimmte Aktionen nach einem bestimmten Ablauf oder einer bestimmten Teilsequenz von unterschiedlichen Prozessschritten ausführt (z.B. den Druck in der Druckluftleitung bis zu einem bestimmten Mindestwert erhöht und danach die Bremse anlegt), wobei die jeweils ausgeführte Aktion durch einen oder mehrere Mess-Sensoren zu einem oder mehreren Zeitpunkten gemessen wird. Die Mess-Sensoren senden dann zu einem oder mehreren Zeitpunkten eine dem jeweiligen Messergebnis entsprechende Signalantwort an die Bremsprobenanlage zurück.

Auch können unterschiedliche Testvorgänge vorgenommen werden. Die vorliegende Erfindung erfordert nicht, dass eine automatische Bremsprobe oder Selbsttest immer vollständig oder für alle Komponenten der Bremsanlage durchgeführt wird. Die Erfindung ist bereits vorteilhaft anwendbar zur Durchführung wenigstens eines Teils einer automatischen Bremsprobe einer Bremsanlage, insbesondere einer Teilsequenz von mehreren Prozessschritten einer automatischen Bremsprobe, wie z.B. das Aufpumpen der Druckluftleitung und eine anschließende Dichtigkeitsprüfung.

Beispielsweise können mit einer erfindungsgemäßen Bremsprobenanlage Auswertungen im Hinblick auf eine automatische Bremsprobe, eine Teilsequenz einer automatischen Bremsprobe, eine Erstellung einer automatisierten Fahrzeugdiagnose, eine Erstellung einer Wagenliste, eine Erstellung eines Bremszettel, und/oder eine Generierung eines Signals einer Fertigmeldung zum Ankuppeln einer Lokomotive durchgeführt werden.

Beispielsweise kann Betriebspersonal den Prozess des wenigstens eines Teils einer automatischen Bremsprobe dabei vor Ort und/oder von einer Leitstelle aus durchführen. Dazu werden beispielsweise vom Betriebspersonal oder allgemein von einer Leitstelle oder einem Datenträger Daten zur Durchführung des wenigstens einen Teils der automatischen Bremsprobe erzeugt oder festgelegt, die ein bestimmtes Testmuster vorgegeben, anhand dessen die Testsignale erzeugt werden. In den Schienenfahrzeugen angebrachte Sensoren messen z.B. den infolge der Testsignale eingestellten Druck in einem Bremszylinder oder in einer Druckluftleitung. Die Kommunikation zwischen den Schienenfahrzeugen untereinander kann über eine Kommunikationsleitung (etwa einen Kommunikationsbus) oder auch drahtlos erfolgen. Hieran kann die Bremsprobenanlage über einen dafür vorgesehenen Anschluss angeschlossen werden.

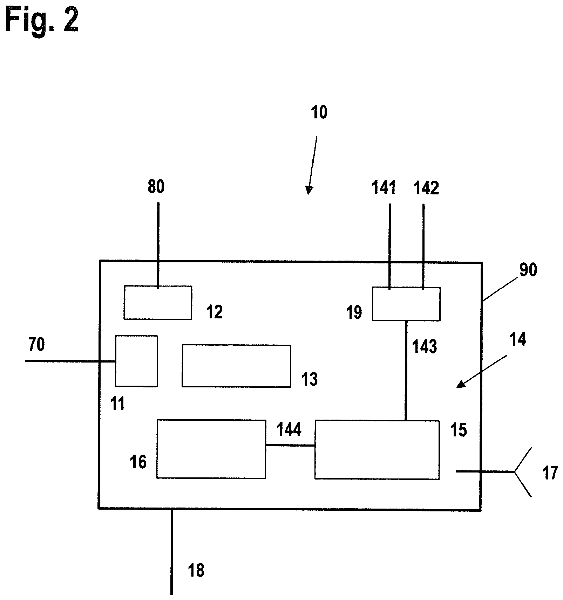

Im Folgenden wird mit Bezug auf **Fig. 1** **und** **2** eine erste Ausführungsform der Erfindung beschrieben. Eine Anordnung 1 zur Durchführung einer automatischen Bremsprobe einer Bremsanlage mindestens eines Schienenfahrzeuges, wie der miteinander gekuppelten Schienenfahrzeuge 201 - 20n des am Gleis 205 aufgestellten Zuges, umfasst neben den bereits beschriebenen Komponenten Lokomotive 101, Leitstelle 301, cloudbasierte Computer-Infrastruktur 501 (im Folgernden kurz "Cloud") und Verarbeitungseinrichtung 401, eine Bremsprobenanlage 10. Diese ist in **Fig. 2** näher dargestellt.

Die Bremsprobenanlage 10 ist beispielsweise stationär neben dem Gleis 205 positioniert, auf welchem sich der Zug mit den Schienenfahrzeugen 201 - 20n befindet. Es kann sich um eine neu hergestellte oder gemäß Aspekten der vorliegenden Erfindung aufgerüstete Bremsprobenanlage handeln. Sie weist beispielsweise ein Gehäuse 90 auf, das neben einem Gleis positionierbar ist. Das Gehäuse 90 ist z.B. auf einer Aufständerung oder anderweitig fest neben dem Gleis installiert.

Gemäß einer allgemeinen Ausführungsform ist die Bremsprobenanlage, wie die in den **Fig. 1 bis 6** dargestellten Ausführungsformen, als eine mobile Anlage ausgebildet, insbesondere mobil entlang dem Gleis oder neben dem Gleis positionierbar, beispielsweise auf Rollen entlang oder neben dem Gleis verfahrbar. Beispielsweise ist gemäß einer Ausführungsform vorgesehen, dass die mobile Anlage auf dem Gleis 205 oder auf einer eigens vorgesehenen parallelen "Sonderschiene" (nicht dargestellt) verfahrbar ist, die z.B. im Gleisbett des Gleises 205 angebracht ist, auf dem sich das oder die Schienenfahrzeuge 201 - 20n befinden. Gemäß einer weiteren Ausführungsform ist es auch möglich, die mobile Anlage in einer "Grube", etwa in einer Bodenvertiefung für Wartungszwecke, in der sich Wartungspersonal und/oder Wartungsmaschinen bewegen können, die z.B. neben oder im Gleisbett des Gleises 205 vorgesehen ist, verfahrbar auszubilden.

Die Bremsprobenanlage im Allgemeinen ist, auch als mobile Anlage, nicht eingerichtet und geeignet, das wenigstens eine Schienenfahrzeug 201 - 20n zu bewegen. Das bedeutet, dass die Bremsprobenanlage zwar mobil auf dem Gleis verfahrbar ausgebildet sein kann, dabei aber nicht nach Art einer Lokomotive oder eines anderen Triebfahrzeugs eingerichtet und geeignet ist, ein oder mehrere der Schienenfahrzeuge 201 - 20n zu bewegen. In einer Ausführungsform, in der die Bremsprobenanlage als angetriebene, beispielsweise selbstfahrende, mobile Anlage ausgebildet ist, ist die entsprechende Antriebseinheit der Bremsprobenanlage nicht eingerichtet und geeignet, eines oder mehrere der Schienenfahrzeuge 201 - 20n zu bewegen. Die Antriebseinheit dient nur dem Antrieb der Bremsprobenanlage selbst und ist nicht dazu ausgelegt (insbesondere reicht von ihrer Leistung her nicht aus), eines oder mehrere der Schienenfahrzeuge 201 - 20n anzutreiben. Auch ist insbesondere keine schub- bzw. zuglastgeeigente Kupplung zur Kopplung für Antriebszwecke mit einem Schienenfahrzeug vorgesehen. Beispielsweise ist das Gehäuse, wie das Gehäuse 90 der beschriebenen Ausführungsformen der **Figuren 1 bis 6****,** auf einem verfahrbaren Drehgestell oder einem Wagen angeordnet. Dieses bzw. dieser kann manuell verschoben und/oder von einem Motor angetrieben werden.

Entsprechend ist die Bremsprobenanlage auch nicht Teil einer Anlage, die eingerichtet und/oder geeignet ist, das oder die Schienenfahrzeuge 201 - 20n zu bewegen. Insbesondere ist die Bremsprobenanlage nicht Teil eines Schienentriebfahrzeugs zur Personenbeförderung und/oder Güterbeförderung, insbesondere nicht Teil einer Lokomotive (wie beispielsweise der Lokomotive 101) oder eines vergleichbaren Schienentriebfahrzeugs mit Unterflurantriebsmaschinen, welches zum Antrieb wenigstens eines der Schienenfahrzeuge 201 - 20n geeignet ist.

Die im folgenden noch näher beschriebene Datenverarbeitungsvorrichtung 14 in ihren verschiedenen Variationen der hierin beschriebenen Ausführungsformen kann bei einer Neuherstellung der Bremsprobenanlage oder auch nachträglich in eine bereits installierte Bremsprobenanlage in deren Gehäuse 90 eingebaut werden, so dass sich beispielsweise auch stationäre Bremsprobenanlagen nachträglich für die Durchführung einer automatischen Bremsprobe gemäß den Aspekten der vorliegenden Erfindung ertüchtigen bzw. aufrüsten lassen.

Die Bremsprobenanlage 10 weist insbesondere eine erste Kopplungseinrichtung 12 auf, die über einen Anschluss 80 verfügt und mit dem Anschluss 202 (insbesondere Fluidanschluss) eines der Schienenfahrzeuge 201 - 20n koppelbar ist, und die zur Bereitstellung eines druckbeaufschlagten Fluids, hier von Druckluft z.B. mit einem bestimmten Mindestdruckwert, an die Bremsanlage 203 des jeweiligen Schienenfahrzeugs 201 - 20n des Zuges dient. Eine im folgenden noch näher beschriebene zweite Kopplungseinrichtung 19 ist einerseits mit der Datenverarbeitungsvorrichtung 14 verbunden und ist andererseits über die Anschlüsse 141, 142 zur Kopplung mit dem Anschluss 202 (insbesondere elektrischen Anschluss) eines der Schienenfahrzeuge 201 - 20n ausgebildet.

Des weiteren kann die Bremsprobenanlage 10 eine weitere, dritte Kopplungseinrichtung 11 aufweisen, die mit einer Fluidquelle 70, z.B. Umgebungsluft oder einem Luftvorratsbehälter, für eine Zuführung eines Fluids, hier Luft, an die Bremsprobenanlage 10 koppelbar ist. Grundsätzlich lässt sich die Erfindung auch auf andere Bremsanlagen anwenden, die mit einem anderen gasförmigen oder flüssigen Fluid als Luft arbeiten, etwa pneumatische Systeme.

Die erste Kopplungseinrichtung 12 ist mit dem Anschluss 202 des entsprechenden Schienenfahrzeugs 201 - 20n und mit einer Druckerzeugungseinrichtung 13 koppelbar. Beispielsweise ist in der Bremsprobenanlage eine Druckerzeugungseinrichtung 13, z.B. ein Kompressor, zur Druckbeaufschlagung des über die Kopplungseinrichtung 11 zugeführten Fluids vorgesehen. Mithin wird in der Druckerzeugungseinrichtung 13 im vorliegenden Beispiel Druckluft erzeugt. Hier ist es vorteilhaft, etwa einen im Vergleich zu Lokomotiv-Kompressoren günstigen Industriekompressor einzusetzen. Die Druckerzeugungseinrichtung kann leistungsfähiger sein als ein Kompressor auf der Lokomotive, um den Aufrüstvorgang zu beschleunigen, denn Gewicht und/oder Bauraum spielen bei einer neben dem Gleis positionierbaren Bremsprobenanlage eine untergeordnete Rolle. Die Druckerzeugungseinrichtung 13 kann aber auch extern zur Bremsprobenanlage vorgesehen sein, so dass ein bereits druckbeaufschlagtes Fluid bereitgestellt wird, das über die Kopplungseinrichtung 12 an die Bremsanlage 203 des wenigstens einen Schienenfahrzeugs 201 - 20n angelegt und weitergegeben wird. Diese Lösung ist vorteilhaft, wenn ein zur Bremsprobenanlage 10 extern vorgesehener Kompressor eingesetzt werden soll. Analoges gilt auch für die nachfolgend beschriebenen Bremsprobenanlagen 30 und 50.

Die Kopplungseinrichtung 12 kann manuell oder automatisch über eine Positioniereinrichtung 206 (etwa ein Roboterarm) an das wenigstens eine Schienenfahrzeug gekoppelt werden, um die Druckluftleitung des gesamten Zuges über den Anschluss 202, hier des letzten Waggons, mit Druckluft zu beaufschlagen, wie bei einer bekannten Bremsprobe üblich.

Die Anschlüsse 141, 142 symbolisieren in dieser Ausführungsform einen Sendeanschluss 141 und einen Empfangsanschluss 142, die mit dem elektrischen Anschluss des Anschlusses 202 verbunden werden, der auch das Ankoppeln und Übertragen von elektrischen Signalen erlaubt und beispielsweise an einen Kommunikationsbus des enstprechenden Schienenfahrzeugs (nicht dargestellt) angeschlossen ist. Die Anschlüsse 141, 142 sind z.B. ein Teil der Kopplungseinrichtung 19, hier in Form einer Sende-/ Empfangseinrichtung 19 der Bremsprobenanlage 10. Die Anschlüsse 141, 142 können als ein gemeinsamer oder als getrennte Anschlüsse ausgeführt sein. Als Stromversorgung dient ein Anschluss 18, der z.B. mit einem Stromnetz, Wechselrichter oder einer Batterie verbunden ist.

Die Datenverarbeitungsvorrichtung 14 kann hardwaremäßig verschiedenartig ausgeführt sein, wie etwa oben beschrieben. Sie enthält eine Datenquelle, hier in Form einer Speichervorrichtung 16, die über eine Verarbeitungseinheit 15 (etwa einen oder mehrere Mikroprozessoren) mit der Sende-/Empfangseinrichtung 19 bzw. den Anschlüssen 141, 142 verbunden ist. Die Verarbeitungseinheit 15 ist konfiguriert, eine automatische Bremsprobe anhand der in der Speichervorrichtung 16 gespeicherten Daten durchzuführen. Dazu ist die Verarbeitungseinheit 15 mit entsprechendem Programmcode programmiert und/oder durch eine integrierte (festverdrahtete) Schaltungsanordnung entsprechend eingerichtet.

Die Speichervorrichtung 16 enthält Daten, die zur Durchführung wenigstens eines Teils einer automatischen Bremsprobe, wie etwa Aufrüstung und Druckprüfung der Druckluftleitung, erforderlich sind. Die Datenverarbeitungsvorrichtung 14, insbesondere die Verarbeitungseinheit 15, ist konfiguriert, die Daten zur Durchführung des wenigstens einen Teils der automatischen Bremsprobe von der Speichervorrichtung 16 zu empfangen und die Testsignale zur Durchführung des wenigstens einen Teils der automatischen Bremsprobe an das oder die Schienenfahrzeuge 201 - 20n zu übertragen, deren Bremsanlage 203 getestet werden soll. Auch ist die Datenverarbeitungsvorrichtung 14, insbesondere die Verarbeitungseinheit 15, konfiguriert, Signalantworten von dem oder den zu testenden Schienenfahrzeugen 201 - 20n während der Durchführung oder nach Beendigung des wenigstens einen Teils der automatischen Bremsprobe zu empfangen. Dabei werden die Signalantworten (die z.B. am Anschluss 143 anliegen) oder davon abgeleitete Signale (die z.B. von der Verarbeitungseinheit 15 verarbeitet, aufbereitet oder umgewandelt wurden und am Anschluss 144 anliegen) an wenigstens eine Auswerteeinrichtung zur Auswertung der empfangenen Signalantworten übertragen. Beispielsweise ist die Speichervorrichtung 16 ein Teil einer solchen Auswerteeinrichtung. So kann die Speichervorrichtung 16 auch empfangene Signalantworten bzw. davon abgeleitete Signale speichern. Ebenso können Signalantworten teilweise oder vollständig durch die Verarbeitungseinheit 15 ausgewertet werden und die Daten der Auswertung alternativ oder zusätzlich über eine Sendeeinrichtung 17 an andere Einrichtungen übertragen werden, etwa direkt an die Lokomotive 101 oder die Leitstelle 301. Übliche Auswertungen sind z.B. die Bewertung der Signalantworten im Hinblick auf eine automatisierte Bremsprobe, Erstellung einer automatisierten Fahrzeugdiagnose, Erstellung einer Wagenliste, Erstellung eines Bremszettel, und/oder Generierung eines Signals einer Fertigmeldung zum Ankuppeln einer Lokomotive. Beispielsweise übersendet die Sendeeinrichtung 17 (z.B. ein Funkmodul per GSM oder WLAN) an eine Kontrollstelle das Ergebnis der Prüfung (z.B. "ok", "nicht ok", ggf. Fehlerprotokoll).

Insbesondere ist oder umfasst die Speichervorrichtung 16 eine Datenquelle, welche die Daten dauerhaft (nicht-flüchtig) oder über einen über die Bremsprobe hinausgehende Zeit speichert. Es kann sich dabei um ein ROM, PROM, EPROM, EEPROM, Flash-Speicher, eine mechanische oder elektronische Festplatte, eine Speicherdisk, eine Speicherkarte, einen Speicherstick oder ähnliches handeln. Die Speichervorrichtung 16 kann von außen beschreibbar sein, beispielsweise zu Beginn einer Bremsprobe, etwa wenn eine Testsequenz modifiziert werden soll, oder als Bauteil austauschbar. Bei der Speichervorrichtung 16 handelt es sich insbesondere nicht um eine Art Arbeitsspeicher, wie den Arbeitsspeicher eines Mikroprozessors, sondern um einen dauerhaften Speicher (dauerhafte Datenquelle oder Quellspeicher) zur Bereitstellung von vorbestimmten Daten zur Durchführung des wenigstens einen Teils der automatischen Bremsprobe. Für den Fall, dass die Speichervorrichtung 16 auch Signalantworten und/oder andere Auswertedaten einer automatischen Bremsprobe speichern soll, kann sie beispielsweise zusätzlich einen Lesespeicher, wie ein RAM oder einen Flash-Speicher, enthalten.

Die Auswertung einer Bremsprobe oder einer Teilsequenz davon kann an die passenden Personen weitergereicht werden, wie etwa einen Bremsprobenberechtigten, Wagenmeister und/oder Rangierer (vgl. **Fig. 2****),** die jeweils die ihnen zugewiesenen Aufgaben und Folgeaktionen anhand der Auswertung vornehmen können.

Vorteilhaft ist, wenn die erste Kopplungseinrichtung 12 und/oder die zweite Kopplungseinrichtung 19 als jeweilige automatische Kopplungseinrichtung ausgeführt sind. Damit lässt sich ein hoher Automatisierungsgrad bei weniger Personaleinsatz realisieren. Ebenso ist es vorteilhaft, wenn die Verbindung zwischen Datenverarbeitungsvorrichtung 14 und eines der Schienenfahrzeuge 201 - 20n über eine automatische Kopplungseinrichtung oder drahtlos geschieht.

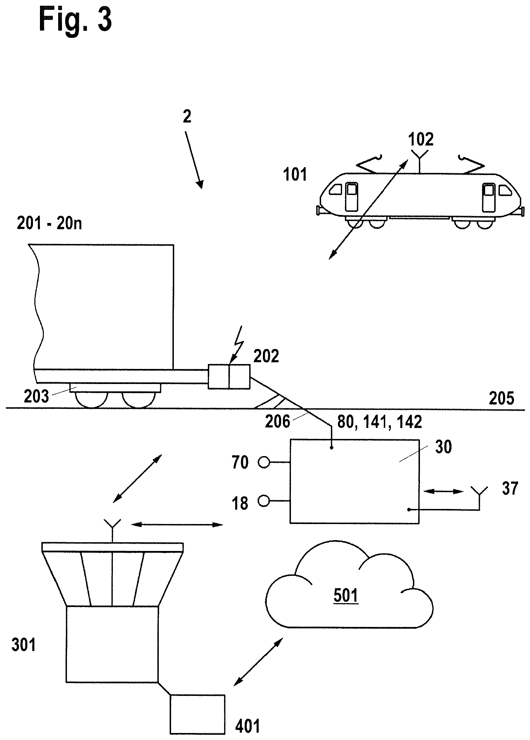

Vorteilhaft ist, wenn Bremsprobenanlage mobil ausgebildet ist, das heißt als eine mobile Anlage ausgebildet ist, die an mehrere unterschiedliche Positionen bewegbar ist, und/oder wenn wenigstens eine der ersten und zweiten Kopplungseinrichtungen 12, 19 an einer Positioniereinrichtung 206 (etwa einen Roboterarm) angebracht ist, die von der Bremsprobenanlage gesteuert in Richtung des Zuges ausfahrbar ist. Damit kann nicht nur der Bremsprobenprozess, sondern auch das Koppeln automatisiert durchgeführt werden. Die Bremsprobenanlage ist damit mobil und kann zu einem Zugende bewegt werden, wobei dies auch ein "Heranfahren" und auch ein "Ausklappen" aus dem Gleis umfassen kann. Diese Ausführungsform kann auch vorteilhaft bei den anderen Ausführungsformen der **Fig. 2** **und** **3** eingesetzt werden.

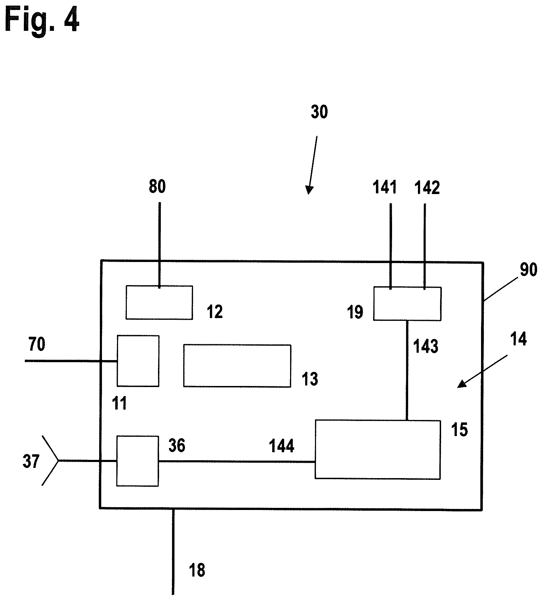

Im Folgenden wird mit Bezug auf **Fig. 3** **und** **4** eine weitere Ausführungsform der Erfindung beschrieben. Eine Anordnung 2 zur Durchführung einer automatischen Bremsprobe einer Bremsanlage mindestens eines Schienenfahrzeuges, wie der miteinander gekuppelten Schienenfahrzeuge 201 - 20n des am Gleis 205 aufgestellten Zuges, umfasst in analoger Weise neben den bereits beschriebenen Komponenten Lokomotive 101, Leitstelle 301, Cloud 501 und Verarbeitungseinrichtung 401, eine Bremsprobenanlage 30. Diese ist in **Fig. 4** näher dargestellt.

Gleiche, funktionsgleiche oder einander entsprechende oder analoge Komponenten sind in den **Fig. 1 bis 6** mit gleichen Bezugszeichen versehen. Entsprechende Merkmale und Funnktionen werden aus Übersichtlichkeitsgründen nicht nochmal erläutert und können in den verschiedenen Ausführungsformen in unterschiedlicher Kombination angewandt werden.

Die Durchführung der oder eines Teils der automatischen Bremsprobe wird unter Steuerung der Leitstelle 301 vorgenommen. Hierzu weist die Datenverarbeitungsvorrichtung 14, im Unterschied zu der in **Fig. 1****,** eine unterschiedliche Datenquelle auf. Die Datenquelle umfasst insbesondere eine Empfangseinrichtung und eine optionale Sendeeinrichtung, die etwa als Sende-/Empfangseinheit 36 kombiniert sind und eine Antenne 37 aufweisen. Über die Sende-/Empfangseinheit 36 und Antenne 37 ist eine Kommunikation mit einer Leitstelle 301 ermöglicht. So können die erforderlichen Testdaten von der Leitstelle 301 erzeugt, mithin vorgegeben werden und anschließend an die Datenquelle (Sende-/Empfangseinheit 36) der Bremsprobenanlage 30 gesendet und von dieser empfangen werden. Hier ist die Datenverarbeitungsvorrichtung 14, insbesondere eine entsprechend programmierte Verarbeitungseinheit 15, konfiguriert, die Daten zur Durchführung der automatischen Bremsprobe von der Leitstelle 301 zu empfangen und anhand derer die Testsignale zur Durchführung der automatischen Bremsprobe an das oder die Schienenfahrzeuge 201 - 20n zu übertragen, deren Bremsanlage 203 getestet werden soll.

Auch die Datenverarbeitungsvorrichtung 14 der Bremsprobenanlage 30, insbesondere die Verarbeitungseinheit 15, ist konfiguriert, Signalantworten von dem oder den zu testenden Schienenfahrzeugen 201 - 20n während der Durchführung oder nach Beendigung des wenigstens einen Teils der automatischen Bremsprobe zu empfangen. Dabei werden die Signalantworten (die z.B. am Anschluss 143 anliegen) oder davon abgeleitete Signale (die z.B. von der Verarbeitungseinheit 15 verarbeitet, aufbereitet oder umgewandelt wurden und am Anschluss 144 anliegen) an wenigstens eine Auswerteeinrichtung zur Auswertung der empfangenen Signalantworten übertragen, die sich beispielsweise wenigstens teilweise in der Leitstelle 310 und/oder Cloud 501 befinden kann. Ebenso können Signalantworten teilweise oder vollständig auch durch die Verarbeitungseinheit 15 ausgewertet werden und die Daten der Auswertung alternativ oder zusätzlich über eine Sende-/Empfangseinheit 36 an andere Einrichtungen übertragen werden, etwa direkt an die Lokomotive 101. Übliche Auswertungen sind beispielsweise die in Bezug zum ersten Ausführungsbeispiel beschriebenen. Die Bremsprobenanlage 30 kann damit die Signalantworten zurück an die Leitstelle 301 übermitteln, die über eine Verarbeitungseinrichtung 401 verfügt, die die Aufgaben analog zur ersten Ausführungsform bearbeiten kann.

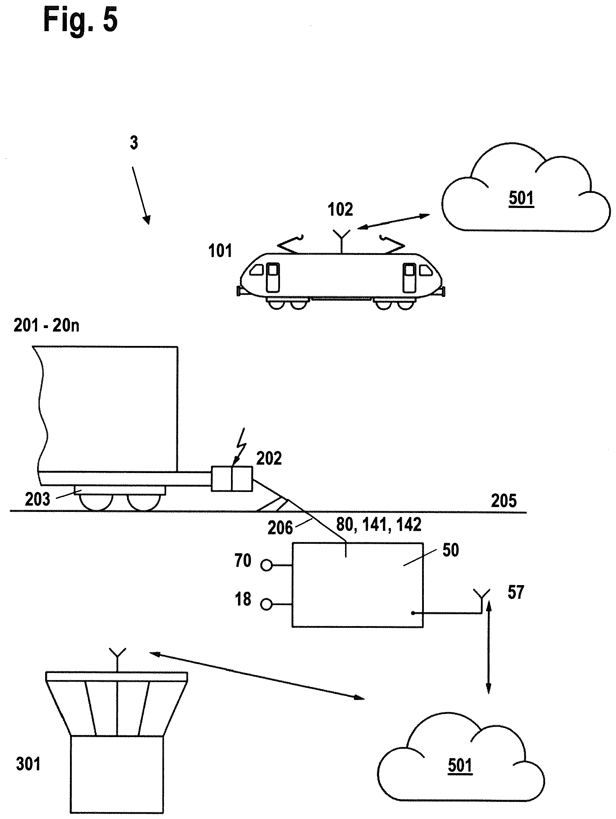

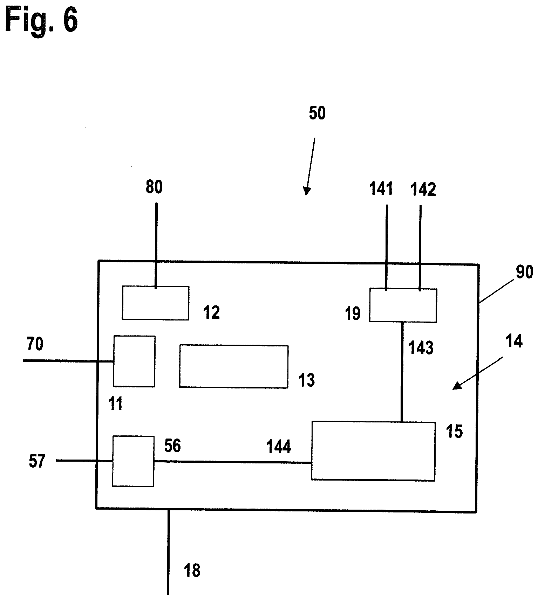

Im Folgenden wird mit Bezug auf **Fig. 5** **und** **6** eine weitere Ausführungsform der Erfindung beschrieben. Eine Anordnung 3 zur Durchführung einer automatischen Bremsprobe einer Bremsanlage mindestens eines Schienenfahrzeuges, wie der miteinander gekuppelten Schienenfahrzeuge 201 - 20n des am Gleis 205 aufgestellten Zuges, umfasst in analoger Weise neben den bereits beschriebenen Komponenten Lokomotive 101, Leitstelle 301, Cloud 501 und Verarbeitungseinrichtung 401, eine Bremsprobenanlage 50. Diese ist in **Fig. 6** näher dargestellt.

Die Durchführung der oder eines Teils der automatischen Bremsprobe wird hier unter Steuerung der Cloud 501 vorgenommen. Hierzu weist die Datenverarbeitungsvorrichtung 14, im Unterschied zu der in **Fig. 3****,** eine unterschiedliche oder modifizierte Datenquelle auf. Die Datenquelle umfasst insbesondere eine Empfangseinrichtung und eine optionale Sendeeinrichtung, die etwa als Sende-/Empfangseinheit 56 kombiniert sind und einen (drahtgebundenen oder drahtlosen) Netzwerkanschluss 57 aufweisen. Über die Sende-/Empfangseinheit 56 und Netzwerkanschluss 57 ist eine Kommunikation mit einer Cloud 501 ermöglicht. So können die erforderlichen Testdaten von der Cloud 501 erzeugt, mithin vorgegeben werden und anschließend an die Datenquelle (Sende-/Empfangseinheit 56) der Bremsprobenanlage 50 gesendet und von dieser empfangen werden. Hier ist die Datenverarbeitungsvorrichtung 14, insbesondere eine entsprechend programmierte Verarbeitungseinheit 15, konfiguriert, die Daten zur Durchführung der automatischen Bremsprobe von der Cloud 501 zu empfangen und anhand derer die Testsignale zur Durchführung der automatischen Bremsprobe an das oder die Schienenfahrzeuge 201 - 20n zu übertragen, deren Bremsanlage 203 getestet werden soll.

Auch die Datenverarbeitungsvorrichtung 14 der Bremsprobenanlage 50, insbesondere die Verarbeitungseinheit 15, ist konfiguriert, Signalantworten von dem oder den zu testenden Schienenfahrzeugen 201 - 20n während der Durchführung oder nach Beendigung des wenigstens einen Teils der automatischen Bremsprobe zu empfangen. Dabei werden die Signalantworten (die z.B. am Anschluss 143 anliegen) oder davon abgeleitete Signale (die z.B. von der Verarbeitungseinheit 15 verarbeitet, aufbereitet oder umgewandelt wurden und am Anschluss 144 anliegen) an wenigstens eine Auswerteeinrichtung zur Auswertung der empfangenen Signalantworten übertragen, die sich beispielsweise wenigstens teilweise in der Leitstelle 301 und/oder Cloud 501 befinden kann. Ebenso können Signalantworten teilweise oder vollständig auch durch die Verarbeitungseinheit 15 ausgewertet werden und die Daten der Auswertung alternativ oder zusätzlich über die Sende-/Empfangseinheit 56 an andere Einrichtungen übertragen werden, etwa direkt an die Lokomotive 101. Übliche Auswertungen gleichen denen der vorbeschriebenen Ausführungsformen. Die Bremsprobenanlage 50 kann damit die Signalantworten zurück zur Cloud 501 übermitteln, die über eine Computer-Infrastruktur verfügt, die die Aufgaben analog zur ersten Ausführungsform bearbeiten kann, und das Ergebnis zur weiteren Verwertung z.B. an die Leitstelle 301 oder Lokomotive 101 übermittelt. Vorteilhaft kann es sein, wenn Bremsprobenanlage, Lokomotive und Leitstelle für die jeweiligen Vorgänge nur mit bzw. über die Cloud 501 kommunizieren.

Die Lokomotive 101 kann vorteilhaft auch als eine autonom (führerlos) fahrende Lokomotive ausgebildet sein. Dazu können die erforderlichen Auswertungen einer automatischen Bremsprobe vor Fahrtbeginn in der Lokomotive 101 selbst (beispielsweise durch eine direkte Verbindung zur Bremsprobenanlage 10, 30, 50) vorgenommen oder beispielsweise von der Leitstelle 301 oder der Cloud 501 zu der Lokomotive 101 gesendet werden.

Die Bremsprobenanlage aller Ausführungsformen liefert den Vorteil, dass ein auf dem Gleis abgestellter Zug für die Fahrt vorbereitet werden kann, ohne dass hierfür eine Lokomotive oder ein manuelles Kuppeln erforderlich ist. Die Bremsprobenanlage übernimmt die Tätigkeiten, die sonst über eine Lokomotive vorgenommen werden müssten, wie Belüften der Pneumatik, Bereitstellen von Testdaten, Empfangen und Bewerten von Signalantworten etc. Die Betriebszeit von teuren Lokomotiven wird verlagert auf betriebskostengünstigere Aufrüstvorrichtungen. Vorteilhaft ist dabei, dass auch schon bestehende Bremsprobenanlagen, die neben einem Gleis positioniert bzw. installiert sind, entsprechend mit einer Datenverarbeitungsvorrichtung 14 der unterschiedlichen Ausführungsformen modifiziert werden können.

### BEZUGSZEICHENLISTE

- 1, 2, 3: Anordnung
- 10, 30, 50: Bremsprobenanlage
- 11, 12: Kopplungseinrichtung
- 13: Druckerzeugungseinrichtung
- 14: Datenverarbeitungsvorrichtung
- 15: Verarbeitungseinheit
- 16: Speichervorrichtung
- 17: Sendeeinrichtung
- 18: Anschluss
- 19: Kopplungseinrichtung (Sende-/ Empfangseinrichtung)
- 36: Sende-/ Empfangseinheit
- 37: Antenne
- 56: Sende-/ Empfangseinheit
- 57: Netzwerkanschluss
- 70: Fluidquelle
- 80: Anschluss
- 90: Gehäuse
- 101: Lokomotive
- 102: Sende-/Empfangseinrichtung
- 141, 142: Anschluss
- 143, 144: Anschluss
- 201 - 20n: Schienenfahrzeug
- 202: Anschluss
- 203: Bremsanlage
- 205: Gleis
- 206: Positioniereinrichtung
- 301: Leit-/Kontrollstelle
- 401: Verarbeitungseinrichtung
- 501: cloudbasierte Computer-Infrastruktur

## Patentansprüche

1. Bremsprobenanlage (10, 30, 50) zur Durchführung wenigstens eines Teils einer automatischen Bremsprobe einer Bremsanlage (203) wenigstens eines Schienenfahrzeugs (201 - 20n), wobei die Bremsprobenanlage nicht Teil eines Schienenfahrzeugs (201 - 20n) und nicht Teil einer Anlage ist, welche eingerichtet ist, das Schienenfahrzeug (201 - 20n) zu bewegen, wobei die Bremsprobenanlage
eine Datenverarbeitungsvorrichtung (14) mit einer Datenquelle (15, 16, 36, 37, 56, 57) aufweist, **gekennzeichnet durch**
eine erste automatische Kopplungseinrichtung (12), die mit wenigstens einem Fluidanschluss (202) des wenigstens einen Schienenfahrzeugs (201 - 20n) koppelbar ist zur Bereitstellung eines druckbeaufschlagten Fluids an die Bremsanlage (203) des wenigstens einen Schienenfahrzeugs (201 - 20n), und
eine zweite automatische Kopplungseinrichtung (19), die mit der Datenverarbeitungsvorrichtung (14) verbunden ist und zur Kopplung mit einem elektrischen Anschluss (202) des wenigstens einen Schienenfahrzeugs (201 - 20n) ausgebildet ist,
wobei die Datenverarbeitungsvorrichtung (14) konfiguriert ist,
Daten zur Durchführung des wenigstens einen Teils der automatischen Bremsprobe von der Datenquelle (15, 16, 36, 37, 56, 57) zu empfangen und Testsignale zur Durchführung des wenigstens einen Teils der automatischen Bremsprobe an das wenigstens eine Schienenfahrzeug (201 - 20n) zu übertragen,
Signalantworten von dem wenigstens einen Schienenfahrzeug (201 - 20n) während der Durchführung oder nach Beendigung des wenigstens einen Teils der automatischen Bremsprobe zu empfangen, und
die Signalantworten oder davon abgeleitete Signale an wenigstens eine Auswerteeinrichtung (15, 101, 301, 501) zur Auswertung der empfangenen Signalantworten zu übertragen.

2. Bremsprobenanlage nach Anspruch 1, bei der
die Datenquelle (15, 16) eingerichtet ist, die Daten zur Durchführung des wenigstens einen Teils der automatischen Bremsprobe zu speichern und
die Datenverarbeitungsvorrichtung (14) konfiguriert ist, anhand der gespeicherten Daten die Testsignale zu erzeugen, die an das wenigstens eine Schienenfahrzeug (201 - 20n) zur Durchführung des wenigstens einen Teils der automatischen Bremsprobe übertragen werden.

3. Bremsprobenanlage nach Anspruch 2, bei der die Datenquelle (15, 16) eingerichtet ist, wenigstens einen Teil der von dem wenigstens einen Schienenfahrzeug (201 - 20n) empfangenen Signalantworten zu speichern.

4. Bremsprobenanlage nach einem der Ansprüche 1 bis 3, wobei die Bremsprobenanlage (10, 30, 50) mindestens einen Teil der Auswerteeinrichtung (15) zur Auswertung der empfangenen Signalantworten aufweist.

5. Bremsprobenanlage nach Anspruch 4, bei der die Auswerteeinrichtung (15) eingerichtet ist, wenigstens eine der folgenden Auswertungen durchzuführen:
eine Bewertung der empfangenen Signalantworten im Hinblick auf die automatische Bremsprobe, eine Erstellung einer automatisierten Fahrzeugdiagnose, eine Erstellung einer Schienenfahrzeugliste, eine Erstellung eines Bremszettels, eine Generierung eines Signals einer Fertigmeldung zum Ankuppeln eines Triebfahrzeugs an das wenigstens eine Schienenfahrzeug (201 - 20n).

6. Bremsprobenanlage nach einem der Ansprüche 1 bis 5, bei der
die Datenquelle eine Empfangseinrichtung (36, 37) aufweist, die eingerichtet ist, mit einer von der Bremsprobenanlage (30) entfernten Leitstelle (301) zum Empfang der Daten zur Durchführung des wenigstens einen Teils der automatischen Bremsprobezu kommunizieren, und
die Datenverarbeitungsvorrichtung (14) konfiguriert ist, anhand der empfangenen Daten die Testsignale zu erzeugen, die an das wenigstens eine Schienenfahrzeug (201 - 20n) zur Durchführung des wenigstens einen Teils der automatischen Bremsprobe übertragen werden.

7. Bremsprobenanlage nach einem der Ansprüche 1 bis 6, bei der
die Datenquelle eine Empfangseinrichtung (56, 57) aufweist, die mit einer von der Bremsprobenanlage (50) entfernten cloudbasierten Computer-Infrastruktur (501) zum Empfang der Daten zur Durchführung des wenigstens einen Teils der automatischen Bremsprobe koppelbar ist, und
die Datenverarbeitungsvorrichtung (14) konfiguriert ist, anhand der empfangenen Daten die Testsignale zu erzeugen, die an das wenigstens eine Schienenfahrzeug (201 - 20n) zur Durchführung des wenigstens einen Teils der automatischen Bremsprobe übertragen werden.

8. Bremsprobenanlage nach einem der Ansprüche 1 bis 7, bei der die Datenverarbeitungsvorrichtung (14) eine Sendeeinrichtung (17, 36, 37, 56, 57) aufweist, die zur Kommunikation und zur Auswertung der empfangenen Signalantworten mit einer von der Bremsprobenanlage (10, 30, 50) entfernten Auswerteeinrichtung (301, 501) koppelbar ist.

9. Bremsprobenanlage nach Anspruch 8, bei der die Sendeeinrichtung (17, 36, 37, 56, 57) zur Auswertung der empfangenen Signalantworten mit einer von der Bremsprobenanlage entfernten Leitstelle (301) zur Durchführung des wenigstens einen Teils der automatischen Bremsprobe oder mit einer von der Bremsprobenanlage entfernten cloudbasierten Computer-Infrastruktur (501) koppelbar ist.

10. Bremsprobenanlage nach einem der Ansprüche 1 bis 9, wobei die Bremsprobenanlage (10, 30, 50) als eine mobile Anlage ausgebildet ist, die in einem Gleisbereich des Gleises (205) an mehrere unterschiedliche Positionen bewegbar ist.

11. Bremsprobenanlage nach einem der Ansprüche 1 bis 10, bei der wenigstens eine der ersten und zweiten Kopplungseinrichtungen (12, 19) an einer von der Bremsprobenanlage (10, 30, 50) in Richtung des wenigstens einen Schienenfahrzeugs (201 - 20n) ausfahrbaŕen und von dieser gesteuerten Positioniereinrichtung (206) angebracht ist.

12. Anordnung (1, 2, 3) zur Durchführung einer automatischen Bremsprobe einer Bremsanlage (203) wenigstens eines Schienenfahrzeugs (201 - 20n), aufweisend:
eine Bremsprobenanlage (10, 30, 50) nach einem der Ansprüche 1 bis 11, und
eine von der Bremsprobenanlage (10, 30, 50) entfernte Leitstelle (301) zur Durchführung des wenigstens einen Teils der automatischen Bremsprobe oder eine von der Bremsprobenanlage (10, 30, 50) entfernte cloudbasierte Computer-Infrastruktur (501), welche mit der Datenquelle (36, 37, 56, 57) der Datenverarbeitungsvorrichtung (14) zum Empfang der Daten zur Durchführung des wenigstens einen Teils der automatischen Bremsprobe gekoppelt ist.

13. Anordnung (1, 2, 3) zur Durchführung einer automatischen Bremsprobe einer Bremsanlage (203) wenigstens eines Schienenfahrzeugs (201 - 20n), insbesondere nach Anspruch 12, aufweisend:
eine Bremsprobenanlage (10, 30, 50) nach einem der Ansprüche 1 bis 11, und
die Auswerteeinrichtung (15, 101, 301, 501) zur Auswertung der empfangenen Signalantworten, wobei wenigstens ein Teil der Auswerteeinrichtung (301, 501) von der Bremsprobenanlage (10, 30, 50) entfernt ist.

14. Anordnung nach Anspruch 13, bei der die Auswerteeinrichtung wenigstens teilweise in einer Leitstelle (301) zur Durchführung des wenigstens einen Teils der automatischen Bremsprobe enthalten oder mit dieser gekoppelt ist, in einer Kontrollstelle (301) zur Bewertung des wenigstens einen Teils der automatischen Bremsprobe enthalten oder mit dieser gekoppelt ist und/oder in einer cloudbasierten Computer-Infrastruktur (501) enthalten oder mit dieser gekoppelt ist.

15. Verfahren zur Herstellung einer Bremsprobenanlage (10, 30, 50) für die Durchführung wenigstens eines Teils einer automatischen Bremsprobe einer Bremsanlage (203) wenigstens eines Schienenfahrzeugs (201 - 20n), mit folgenden Schritten:
Bereitstellen einer Bremsprobenanlage (10, 20, 50), welche nicht Teil einer Anlage, welche eingerichtet ist, das wenigstens eine Schienenfahrzeug (201 - 20n) zu bewegen, ist, wobei die Bremsprobenanlage (10, 20, 50)
eine erste automatische Kopplungseinrichtung (12) aufweist, die mit wenigstens einem Fluidanschluss (202) des wenigstens einen Schienenfahrzeugs (201 - 20n) koppelbar ist zur Bereitstellung eines druckbeaufschlagten Fluids an die Bremsanlage (203) des wenigstens einen Schienenfahrzeugs (201 - 20n), und
eine zweite automatische Kopplungseinrichtung (19) aufweist, die zur Kopplung mit einem elektrischen Anschluss (202) des wenigstens einen Schienenfahrzeugs (201 - 20n) ausgebildet ist,
und
Anordnen einer Datenverarbeitungsvorrichtung (14) mit einer Datenquelle (15, 16, 36, 37, 56, 57) in der Bremsprobenanlage und Verbinden der Datenverarbeitungsvorrichtung (14) mit der zweiten Kopplungseinrichtung (19), wobei die Datenverarbeitungsvorrichtung (14) konfiguriert ist
Daten zur Durchführung des wenigstens einen Teils der automatischen Bremsprobe von der Datenquelle (15, 16, 36, 37, 56, 57) zu empfangen und Testsignale zur Durchführung des wenigstens einen Teils der automatischen Bremsprobe an das wenigstens eine Schienenfahrzeug (201 - 20n) zu übertragen,
Signalantworten von dem wenigstens einen Schienenfahrzeug (201 - 20n) während der Durchführung oder nach Beendigung des wenigstens einen Teils der automatischen Bremsprobe zu empfangen, und
die Signalantworten oder davon abgeleitete Signale an wenigstens eine Auswerteeinrichtung (15, 301, 501) zur Auswertung der empfangenen Signalantworten zu übertragen.

16. Verfahren nach Anspruch 15, wobei der Schritt des Anordnens der Datenverarbeitungsvorrichtung (14) in einer stationären Bremsprobenanlage (10, 30, 50) durchgeführt wird, die neben dem Gleis positioniert ist.

## Claims

1. Brake test system (10, 30, 50) for performing at least one part of an automatic brake test of a brake system (203) of at least one rail vehicle (201 - 20n), wherein the brake test system is not part of a rail vehicle (201 - 20n) and is not part of a system, which is arranged
to move the rail vehicle (201 - 20n), wherein the brake test system
has a data processing device (14) with a data source (15, 16, 36, 37, 56, 57), **characterised by**
a first automatic coupling apparatus (12), which can be coupled to at least one fluid connector (202) of the at least one rail vehicle (201 - 20n) for providing a pressurised fluid to the brake system (203) of the at least one rail vehicle (201 - 20n), and
a second automatic coupling apparatus (19), which is connected to the data processing device (14) and is designed for coupling to an electric connector (202) of the at least one rail vehicle (201 - 20n),
wherein the data processing device (14) is configured,
to receive data for performing the at least one part of the automatic brake test from the data source (15, 16, 36, 37, 56, 57) and to transmit test signals for performing the at least one part of the automatic brake test to the at least one rail vehicle (201 - 20n), to receive signal responses from the at least one rail vehicle (201 - 20n) during the performing or after completion of the at least one part of the automatic brake test, and
to transmit the signal responses or signals derived therefrom to at least one evaluation apparatus (15, 101, 301, 501) for the evaluation of the received signal responses.

2. Brake test system according to claim 1, in which
the data source (15, 16) is arranged to store the data for performing the at least one part of the automatic brake test, and
the data processing device (14) is configured to generate the test signals on the basis of the saved data, which are transmitted to the at least one rail vehicle (201 - 20n) for performing the at least one part of the automatic brake test.

3. Brake test system according to claim 2, in which the data source (15, 16) is arranged to store at least part of the signal responses received from the at least one rail vehicle (201 - 20n).

4. Brake test system according to any one of claims 1 to 3, wherein the brake test system (10, 30, 50) has at least a part of the evaluation apparatus (15) for the evaluation of the received signal responses.

5. Brake test system according to claim 4, in which the evaluation apparatus (15) is arranged to perform at least one of the following evaluations:
an evaluation of the received signal responses with respect to the automatic brake test, a creation of an automated vehicle diagnosis, a creation of a rail vehicle list, a creation of a brake sheet, a generation of a readiness signal for coupling a traction vehicle to the at least one rail vehicle (201 - 20n).

6. Brake test system according to any one of claims 1 to 5, in which
the data source has a receiver apparatus (36, 37), which is arranged to communicate with a control center (301) remote from the brake test system (30) for receiving the data for performing the at least one part of the automatic brake test, and
the data processing device (14) is configured to generate the test signals on the basis of the received data, which are transmitted to the at least one rail vehicle (201 - 20n) for performing the at least one part of the automatic brake test.

7. Brake test system according to any one of claims 1 to 6, in which
the data source has a receiver apparatus (56, 57) which can be coupled to a cloud-based computer infrastructure (501) remote from the brake test system (50) for receiving the data for performing the at least one part of the automatic brake test, and
the data processing device (14) is configured to generate the test signals on the basis of the received data, which are transmitted to the at least one rail vehicle (201 - 20n) for performing the at least one part of the automatic brake test.

8. Brake test system according to any one of claims 1 to 7, in which
the data processing device (14) has a transmitter apparatus (17, 36, 37, 56, 57) which can be coupled to an evaluation apparatus (301, 501) remote from the brake test system (10, 30, 50) for the communication and for the evaluation of the received signal responses.

9. Brake test system according to claim 8, in which the transmitting apparatus (17, 36, 37, 56, 57) for the evaluation of the received signal responses can be coupled to a control center (301) remote from the brake test system for performing the at least one part of the automatic brake test or to a cloud-based computer infrastructure (501) remote from the brake test system.

10. Brake test system according to any one of claims 1 to 9, wherein the brake test system (10, 30, 50) is designed as a mobile system that can be moved into several different positions in a region of the track (205).

11. Brake test system according to any one of claims 1 to 10, in which at least one of the first and second coupling apparatuses (12, 19) is attached to a positioning apparatus (206) that can be extended by the brake test system (10, 30, 50) in the direction of the at least one rail vehicle (201 - 20n) and is controlled thereby.

12. Arrangement (1, 2, 3) for performing an automatic brake test of a brake system (203) of at least one rail vehicle (201 - 20n), having:
a brake test system (10, 30, 50) according to any one of claims 1 to 11, and
a control center (301) remote from the brake test system (10, 30, 50) for performing at least one part of the automatic brake test or a cloud-based computer infrastructure (501) remote from the brake test system (10, 30, 50), which is coupled to the data source (36, 37, 56, 57) of the data processing device (14) for receiving the data for performing the at least one part of the automatic brake test.

13. Arrangement (1, 2, 3) for performing an automatic brake test of a brake system (203) of at least one rail vehicle (201 - 20n), in particular according to claim 12, having:
a brake test system (10, 30, 50) according to any one of claims 1 to 11, and
the evaluation apparatus (15, 101, 301, 501) for the evaluation of the received signal responses, wherein at least one part of the evaluation apparatus (301, 501) is remote from the brake test system (10, 30, 50).

14. Arrangement according to claim 13, in which the evaluation apparatus is at least partly contained in a control center (301) for performing the at least one part of the automatic brake test or is coupled to the latter, is contained in a control center (301) for the evaluation of at least one part of the automatic brake test or is coupled to the latter and/or is contained in or coupled to a cloud-based computer infrastructure (501).

15. Method for producing a brake test system (10, 30, 50) for performing at least one part of an automatic brake test of a brake system (203) of at least one rail vehicle (201 - 20n), with the following steps:
providing a brake test system (10, 20, 50), which is not part of a system, which is arranged to move the at least one rail vehicle (201 - 20n), wherein the brake test system (10, 20, 50)
has a first automatic coupling apparatus (12) which can be coupled to at least one fluid connector (202) of the at least one rail vehicle (201 - 20n) for providing a pressurised fluid to the brake system (203) of the at least one rail vehicle (201 - 20n), and
has a second automatic coupling apparatus (19) which is designed for coupling to an electric connector (202) of the at least one rail vehicle (201 - 20n), and
arranging a data processing device (14) with a data source (15, 16, 36, 37, 56, 57) in the brake test system and connecting the data processing device (14) to the second coupling apparatus (19), wherein the data processing device (14) is configured
to receive data for performing the at least one part of the automatic brake test from the data source (15, 16, 36, 37, 56, 57) and to transmit test signals for performing the at least one part of the automatic brake test to the at least one rail vehicle (201 - 20n),
to receive signal responses from the at least one rail vehicle (201 - 20n) while performing or after completing the at least one part of the automatic brake test, and
to transmit the signal responses or signals derived therefrom to at least one evaluation apparatus (15, 301, 501) for the evaluation of the received signal responses.

16. Method according to claim 15, wherein the step of arranging the data processing device (14) is performed in a stationary brake test system (10, 30, 50) which is positioned alongside the track.

## Revendications

1. Installation d'essai de freinage (10, 30, 50) pour exécuter au moins une partie d'un essai de freinage automatique d'une installation de freinage (203) d'au moins un véhicule ferroviaire (201 - 20n), dans laquelle l'installation d'essai de freinage ne fait pas partie d'un véhicule ferroviaire (201 - 20n) et ne fait pas partie d'une installation qui est configurée pour
déplacer le véhicule ferroviaire (201 - 20n), dans laquelle l'installation d'essai de freinage
présente un dispositif de traitement de données (14) avec une source de données (15, 16, 36, 37, 56, 57), **caractérisée par**
un premier appareil de couplage automatique (12) qui peut être couplé à au moins un raccord fluidique (202) de l'au moins un véhicule ferroviaire (201 - 20n) pour fournir un fluide sous pression à l'installation de freinage (203) de l'au moins un véhicule ferroviaire (201 - 20n), et
un second appareil de couplage automatique (19) qui est connecté au dispositif de traitement de données (14) et est conçu pour être couplé à un raccord électrique (202) de l'au moins un véhicule ferroviaire (201 - 20n),
dans laquelle le dispositif de traitement de données (14) est configuré pour recevoir des données pour exécuter la au moins une partie de l'essai de freinage automatique de la source de données (15, 16, 36, 37, 56, 57) et transmettre des signaux de test pour exécuter la au moins une partie de l'essai de freinage automatique à l'au moins un véhicule ferroviaire (201 - 20n), recevoir des réponses de signal de l'au moins un véhicule ferroviaire (201 - 20n) pendant l'exécution ou après la fin de la au moins une partie de l'essai de freinage automatique, et
transmettre les réponses de signal ou les signaux qui en sont dérivés à au moins un appareil d'évaluation (15, 101, 301, 501) pour évaluer les réponses de signal reçues.

2. Installation d'essai de freinage selon la revendication 1, dans laquelle
la source de données (15, 16) est configurée pour stocker les données pour exécuter la au moins une partie de l'essai de freinage automatique et
le dispositif de traitement de données (14) est configuré pour générer, à l'aide des données stockées, les signaux de test qui sont transmis à l'au moins un véhicule ferroviaire (201 - 20n) pour exécuter la au moins une partie de l'essai de freinage automatique.

3. Installation d'essai de freinage selon la revendication 2, dans laquelle la source de données (15, 16) est configurée pour stocker au moins une partie des réponses de signal reçues de l'au moins un véhicule ferroviaire (201 - 20n).

4. Installation d'essai de freinage selon l'une quelconque des revendications 1 à 3, dans laquelle l'installation d'essai de freinage (10, 30, 50) présente au moins une partie de l'appareil d'évaluation (15) pour évaluer les réponses de signal reçues.

5. Installation d'essai de freinage selon la revendication 4, dans laquelle l'appareil d'évaluation (15) est configuré pour exécuter au moins l'une des évaluations suivantes :
une évaluation des réponses de signal reçues en vue de l'essai de freinage automatique, une création d'un diagnostic de véhicule automatisé, une création d'une liste de véhicules ferroviaires, une création d'une fiche de freinage, une génération d'un signal de disponibilité pour le couplage d'un véhicule moteur à l'au moins un véhicule ferroviaire (201 - 20n).

6. Installation d'essai de freinage selon l'une quelconque des revendications 1 à 5, dans laquelle
la source de données présente un appareil de réception (36, 37) qui est configuré pour communiquer avec un poste de commande (301) distant de l'installation d'essai de freinage (30) pour recevoir les données pour exécuter au moins une partie de l'essai de freinage automatique, et
le dispositif de traitement de données (14) est configuré pour générer, à l'aide des données reçues, les signaux de test qui sont transmis à l'au moins un véhicule ferroviaire (201 - 20n) pour exécuter la au moins une partie de l'essai de freinage automatique.

7. Installation d'essai de freinage selon l'une quelconque des revendications 1 à 6, dans laquelle
la source de données présente un appareil de réception (56, 57) qui peut être couplé à une infrastructure informatique basée sur le cloud (501) distante de l'installation d'essai de freinage (50) pour recevoir les données pour exécuter la au moins une partie de l'essai de freinage automatique, et
le dispositif de traitement de données (14) est configuré pour générer, à l'aide des données reçues, les signaux de test qui sont transmis à l'au moins un véhicule ferroviaire (201 - 20n) pour exécuter la au moins une partie de l'essai de freinage automatique.

8. Installation d'essai de freinage selon l'une quelconque des revendications 1 à 7, dans laquelle
le dispositif de traitement de données (14) présente un appareil d'émission (17, 36, 37, 56, 57) qui peut être couplé à un appareil d'évaluation (301, 501) distant de l'installation d'essai de freinage (10, 30, 50) pour communiquer et évaluer les réponses de signal reçues.

9. Installation d'essai de freinage selon la revendication 8, dans laquelle l'appareil d'émission (17, 36, 37, 56, 57) peut être couplé, pour évaluer les réponses de signal reçues, à un poste de commande (301) distant de l'installation d'essai de freinage pour exécuter au moins une partie de l'essai de freinage automatique ou à une infrastructure informatique (501) basée sur le cloud distante de l'installation d'essai de freinage.

10. Installation d'essai de freinage selon l'une quelconque des revendications 1 à 9, dans laquelle l'installation d'essai de freinage (10, 30, 50) est conçue en tant qu'installation mobile qui peut être déplacée vers plusieurs positions différentes dans une zone de voie de la voie (205).

11. Installation d'essai de freinage selon l'une quelconque des revendications 1 à 10, dans laquelle au moins un des premier et second appareils de couplage (12, 19) est placé sur un appareil de positionnement (206) déployable par l'installation d'essai de freinage (10, 30, 50) en direction de l'au moins un véhicule ferroviaire (201 - 20n) et commandé par celui-ci.

12. Agencement (1, 2, 3) pour exécuter un essai de freinage automatique d'une installation de freinage (203) d'au moins un véhicule ferroviaire (201 - 20n), présentant :
une installation d'essai de freinage (10, 30, 50) selon l'une quelconque des revendications 1 à 11, et
un poste de commande (301) distant de l'installation d'essai de freinage (10, 30, 50) pour exécuter la au moins une partie de l'essai de freinage automatique ou une infrastructure informatique basée sur le cloud (501) distante de l'installation d'essai de freinage (10, 30, 50) et couplée à la source de données (36, 37, 56, 57) du dispositif de traitement de données (14) pour recevoir les données pour exécuter la au moins une partie de l'essai de freinage automatique.

13. Agencement (1, 2, 3) pour exécuter un essai de freinage automatique d'une installation de freinage (203) d'au moins un véhicule ferroviaire (201 - 20n), en particulier selon la revendication 12, présentant :
une installation d'essai de freinage (10, 30, 50) selon l'une quelconque des revendications 1 à 11, et
l'appareil d'évaluation (15, 101, 301, 501) pour évaluer les réponses de signal reçues, dans lequel au moins une partie de l'appareil d'évaluation (301, 501) est distante de l'installation d'essai de freinage (10, 30, 50).

14. Agencement selon la revendication 13, dans lequel l'appareil d'évaluation est au moins partiellement contenu dans ou couplé à un poste de commande (301) pour exécuter la au moins une partie de l'essai de freinage automatique, contenu dans ou couplé à un poste de commande (301) pour évaluer la au moins une partie de l'essai de freinage automatique et/ou contenu dans ou couplé à une infrastructure informatique basée sur le cloud (501).

15. Procédé de fabrication d'une installation d'essai de freinage (10, 30, 50) pour exécuter au moins une partie d'un essai de frein automatique d'une installation d'essai de freinage (203) d'au moins un véhicule ferroviaire (201 - 20n), avec les étapes suivantes :
fournir une installation d'essai de freinage (10, 20, 50), qui ne fait pas partie d'une installation, qui est configurée pour déplacer le au moins un véhicule ferroviaire (201 - 20n), dans lequel l'installation d'essai de freinage (10, 20, 50)
présente un premier appareil de couplage automatique (12) qui peut être couplé à au moins un raccord fluidique (202) de l'au moins un véhicule ferroviaire (201 - 20n) pour fournir un fluide sous pression à l'installation de freinage (203) de l'au moins un véhicule ferroviaire (201 - 20n), et
présente un second appareil de couplage automatique (19) qui est conçu pour être couplé à un raccord électrique (202) de l'au moins un véhicule ferroviaire (201 - 20n), et
agencer un dispositif de traitement de données (14) avec une source de données (15, 16, 36, 37, 56, 57) dans l'installation d'essai de freinage et connecter le dispositif de traitement de données (14) au second appareil de couplage (19), dans lequel le dispositif de traitement de données (14) est configuré pour
recevoir des données pour exécuter la au moins une partie de l'essai de freinage automatique de la source de données (15, 16, 36, 37, 56, 57) et transmettre des signaux de test pour exécuter la au moins une partie de l'essai de freinage automatique à l'au moins un véhicule ferroviaire (201 - 20n),
recevoir des réponses de signal de l'au moins un véhicule ferroviaire (201 - 20n) pendant l'exécution ou après la fin de la au moins une partie de l'essai de freinage automatique, et
transmettre les réponses de signal ou les signaux qui en sont dérivés à au moins un appareil d'évaluation (15, 301, 501) pour évaluer les réponses de signal reçues.

16. Procédé selon la revendication 15, dans lequel l'étape d'agencement du dispositif de traitement de données (14) est exécutée dans une installation d'essai de freinage stationnaire (10, 30, 50) qui est positionnée à côté de la voie.
